# FASCICULE DE BREVET EUROPEEN

(11) **EP 1 676 444 B1**
(45) Date de publication et mention de la délivrance du brevet: **07.10.2009**
(21) Numéro de dépôt: 04805285.6
(22) Date de dépôt: 22.10.2004
(51) Int. Cl.: H04N 7/18, H04N 5/225, H04N 5/262

(54) **PROCEDE ET DISPOSITIF DE CAPTURE D'UNE IMAGE GRAND CHAMP ET D'UNE REGION D'INTERET DE CELLE-CI**
VERFAHREN UND EINRICHTUNG ZUR ERFASSUNG EINES WEITWINKELBILDES UND EINER INTERESSIERENDEN REGION DAVON
METHOD AND DEVICE FOR CAPTURING A LARGE-FIELD IMAGE AND REGION OF INTEREST THEREOF

(30) Priorité: 24.10.2003 FR 0312469; 23.12.2003 US 532750 P
(43) Date de publication de la demande: 05.07.2006
(73) Titulaire: Winlight System Finance, 13016 Marseille (FR)
(72) Inventeur: SOLER, Daniel, F-84240 La Tour D'Aigues (FR); GODEFROY, Philippe, F-13006 Marseille (FR)
(74) Mandataire: Domange, Maxime
(86) Numéro de dépôt international: PCT/FR2004/002723
(87) Numéro de publication internationale: WO 2005/046240

(56) Documents cités:
- WO-A-02/17235
- US-A- 4 099 849
- US-A1- 2002 012 059
- US-A1- 2003 103 063

## Description

L'invention se rapporte à un procédé et un dispositif de capture, et éventuellement de visualisation et de traitement, d'une image grand champ simplement connexe.

Dans la suite de ce document, l'expression « simplement connexe » sera à comprendre au sens mathématique du terme. Dans le contexte de l'invention, elle signifie que le grand champ observé est connexe et sans trou, à la différence par exemple d'un champ de vision périphérique qui présenterait une perte de champ autour de l'axe de symétrie.

Elle vise plus particulièrement un procédé et un dispositif pour capturer ou visualiser une région d'intérêt d'une telle image, cette région d'intérêt ayant une résolution bien supérieure à celle de ladite image tout en ayant préférentiellement le même détecteur matriciel.

L'invention trouve des applications, et ce de façon non limitative, dans des dispositifs de traitement d'image, des dispositifs de surveillance ou de télésurveillance, et dans des systèmes d'observation embarqués dans des véhicules ou des robots en mouvement et, de façon plus générale, dans des applications où une très grande résolution est requise.

Un tel procédé peut notamment être utilisé pour explorer une image grand champ couvrant un demi espace entier en faisant "glisser" la région d'intérêt observée, et effectuer notamment des zooms optiques ou des détections sur ces régions d'intérêt.

Il est déjà connu des procédés et des dispositifs d'affichage et de traitement d'image panoramiques et de portions de telles images.

Ces procédés connus concernent plus particulièrement des méthodes logicielles ou de traitement mathématique pour corriger les distorsions ou retarder les aspects de granulosité qui apparaissent lors du grossissement d'une portion d'usage panoramique obtenue avec un objectif à grand champ (en anglais "fish-eye").

Le document US 5 185 667 décrit, en particulier, l'utilisation de différentes fonctions mathématiques pour corriger les distorsions dans une région d'intérêt d'une image panoramique.

De façon similaire, le document FR 2 827 680 propose une méthode consistant à dilater l'image panoramique projetée sur un capteur d'image rectangulaire et un objectif fish-eye adapté à déformer les images par anamorphose.

Enfin, le document US 5 680 667 décrit un système de téléconférence dans lequel une portion d'une image panoramique correspondant au participant ayant la parole à un moment donné, et sélectionnée automatiquement, est corrigée électroniquement avant transmission.

En résumé, les différents procédés et dispositifs analysés ci-dessus utilisent des méthodes de traitement numérique d'une image panoramique pour fournir un agrandissement d'une région d'intérêt de celle-ci.

Ces méthodes présentent toutes l'inconvénient que le degré de résolution de la portion d'image sélectionnée est limité par la résolution de l'objectif "fish-eye" d'acquisition de l'image panoramique.

Un autre dispositif connu, et décrit dans le document US 2002/0012059 (DRISCOLL), utilise un objectif optique grand champ pour dupliquer le plan image.

Ce dispositif comporte un premier détecteur matriciel placé dans un premier plan image et un deuxième détecteur matriciel placé dans le second plan image, les pixels du premier détecteur matriciel étant de plus petite taille que ceux du second détecteur matriciel.

Le premier détecteur matriciel est déplacé par translation ou rotation dans l'un des deux plans image pour scruter le grand champ avec une meilleure résolution.

L'homme du métier comprendra que, dans ce dispositif, l'augmentation de résolution de la zone d'intérêt de l'image est égale au rapport de la taille des pixels de ces deux détecteurs matriciels.

Or, un dispositif de ce type, dans lequel la résolution est directement dépendante du rapport de résolution des deux détecteurs, ne peut être utilisé dans de nombreuses applications et notamment :
- dans les applications du domaine de l'infrarouge (3-5 micromètres) et (8-12 micromètres) pour lesquelles il n'existe pas de détecteurs de dimensions permettant d'obtenir un grossissement d'un facteur dix, par exemple ; et
- les applications dans le domaine de l'optique visible avec des facteurs de résolution supérieurs à dix.

Un autre dispositif connu décrit dans le document US 2003/0095338 utilise des miroirs de formes complexes pour capturer un champ périphérique et l'imager sur une ou plusieurs caméras.

Malheureusement, de tels dispositifs comportent tous un système de capture du champ de vision aveugles sur une partie du champ, rendant impossible une vision grand champ simplement connexe.

L'invention vise à palier ces inconvénients.

A cet effet, et selon un premier aspect, l'invention concerne un dispositif de capture d'une image acquise par un système optique grand champ préférentiellement constitué d'un afocal de grossissement angulaire inférieur à un, ce système optique fournissant un premier faisceau lumineux correspondant à ce grand champ. Ce dispositif comporte :
- des moyens de sélection, à partir du premier faisceau, d'un deuxième faisceau lumineux correspondant à un champ réduit du grand champ définissant une étendue angulaire représentative d'une région d'intérêt quelconque de la image ;
- une première caméra, comportant un premier objectif adapté à capturer le deuxième faisceau à champ réduit avec une première résolution ;
- des moyens pour dupliquer le premier faisceau lumineux grand champ en un premier faisceau dupliqué ; et
- une deuxième caméra comportant un deuxième objectif, différent du premier, adapté à capturer l'intégralité du premier faisceau dupliqué avec une deuxième résolution pour l'étendue angulaire de la région d'intérêt, inférieure à la première résolution, et avec un coefficient de réduction défini par le rapport entre le grand champ et le champ réduit.

La deuxième caméra et la première caméra ont des matrices d'éléments photosensibles.

Ainsi, le dispositif de capture selon l'invention utilise une technique purement optique pour obtenir l'accroissement de résolution de la zone d'intérêt de l'image, même si les matrices d'éléments photosensibles des deux caméras sont identiques.

Par ailleurs, le système selon l'invention permet de capturer l'intégralité du demi-espace.

L'invention permet ainsi d'observer une région d'intérêt d'une image grand champ avec une résolution bien supérieure à celle disponible avec les dispositifs et procédés connus jusqu'alors.

Dans une première variante dans laquelle la première caméra est mobile, les moyens de sélection comportent des moyens de positionnement de cette première caméra, dans une position telle qu'elle reçoit le deuxième faisceau.

Dans une deuxième variante dans laquelle la première caméra est fixe, les moyens de sélection comportent des moyens de déviation adaptés à dévier le deuxième faisceau en direction de la première caméra. Ces moyens de déviation peuvent notamment être constitués par un prisme, un miroir ou tout système de diffraction mobile en rotation dans le premier faisceau.

Ces deux variantes de réalisation permettent ainsi de capturer, avec une haute résolution, une région d'intérêt d'une image grand champ, sans qu'il soit nécessaire de déplacer la première caméra dans tout ce grand champ. En supposant par exemple que le grand champ corresponde à un demi-espace (180°) et que le coefficient de réduction défini par le rapport entre le grand champ et le champ réduit soit égale à dix, il suffit de déplacer la première caméra (ou les moyens de déviation) d'un angle de 18° pour couvrir tout le demi-espace avec la première caméra.

On obtient ainsi un dispositif de capture particulièrement rapide.

Fort avantageusement, lorsque ce dispositif de capture est embarqué dans un véhicule ou un robot, l'encombrement extérieur de ce dispositif de capture correspond à la seule optique du système optique fixe grand champ. Cette caractéristique est particulièrement importante lorsque le dispositif est installé dans des aéronefs aux fortes contraintes aérodynamiques.

Préférentiellement, la première caméra comporte un dispositif de zoom optique permettant de définir l'étendue angulaire de la région d'intérêt.

Dans un mode préféré de réalisation, le dispositif selon l'invention comporte en outre des moyens pour dupliquer le premier faisceau en un premier faisceau dupliqué et une deuxième caméra pour capturer l'intégralité du premier faisceau dupliqué.

Dans une première variante de ce mode préféré de réalisation, le dispositif de capture selon l'invention comporte un poste de visualisation permettant de visualiser l'image grand champ dans son ensemble capturée par la deuxième caméra, ce poste de visualisation étant situé à proximité de moyens de commande des moyens de sélection permettant de définir la région d'intérêt.

Il est alors possible de positionner la première caméra dans le deuxième faisceau correspondant à la région d'intérêt, sous contrôle de l'image grand champ dans son ensemble, et de commander le zoom optique à partir de ce poste de visualisation.

Ainsi, l'observateur peut agrandir une portion de l'image panoramique depuis le poste de visualisation, par exemple à l'aide d'une manette ou d'un joystick, la résolution de la région d'intérêt étant définie par les caractéristiques de la première caméra.

Dans une deuxième variante de ce mode préféré de réalisation, le dispositif de capture selon l'invention comporte des moyens de traitement d'image de l'image grand champ capturée par la deuxième caméra, ces moyens de traitement étant adaptés à détecter un mouvement et/ou une variation de l'intensité lumineuse dans cette image et à commander les moyens de sélection de la région d'intérêt en fonction du résultat de cette détection.

Cette variante de réalisation--est particulièrement adaptée aux applications de surveillance ou de détection d'intrusion.

Dans une variante de réalisation, principalement aux fins militaires, le système optique et la première caméra sont aptes à capturer les premier et deuxième faisceaux lumineux dans le domaine de l'infrarouge.

L'invention vise aussi un système de capture d'une image couvrant un complet espace à 360°, ce système de capture comportant deux dispositifs de capture tels que décrits brièvement ci-dessus et agencés tête bêche, les systèmes optiques de ces dispositifs de capture étant aptes à couvrir un demi-espace.

Les avantages du procédé de capture et du système de capture étant identiques à ceux du dispositif de capture décrit précédemment, ils ne seront pas rappelés ici.

D'autres aspects et avantages de la présente invention apparaîtront plus clairement à la lecture de la description d'un mode particulier de réalisation qui va suivre, cette description étant donnée uniquement à titre d'exemples non limitatifs et faite en référence aux dessins annexés sur lesquels :
- la figure 1A représente un dispositif de capture conforme à l'invention dans un mode préféré de réalisation ;
- les figures 1B et 1C représentent des détails du dispositif de capture de la figure 1A ;
- la figure 2 représente un dispositif de capture conforme à l'invention dans un autre mode de réalisation ;
- la figure 3 représente à plus grande échelle les espaces observés par chacune des caméras du dispositif dans le mode de réalisation des figures 1A à 2 ;
- la figure 4 représente les principales étapes E5 à E90 d'un procédé de capture selon l'invention dans un mode préféré de réalisation ;
- la figure 5A représente un système de capture couvrant un espace à 360° conforme à l'invention dans un mode préféré de réalisation ; et
- la figure 5B représente des détails du système de capture de la figure 5A.

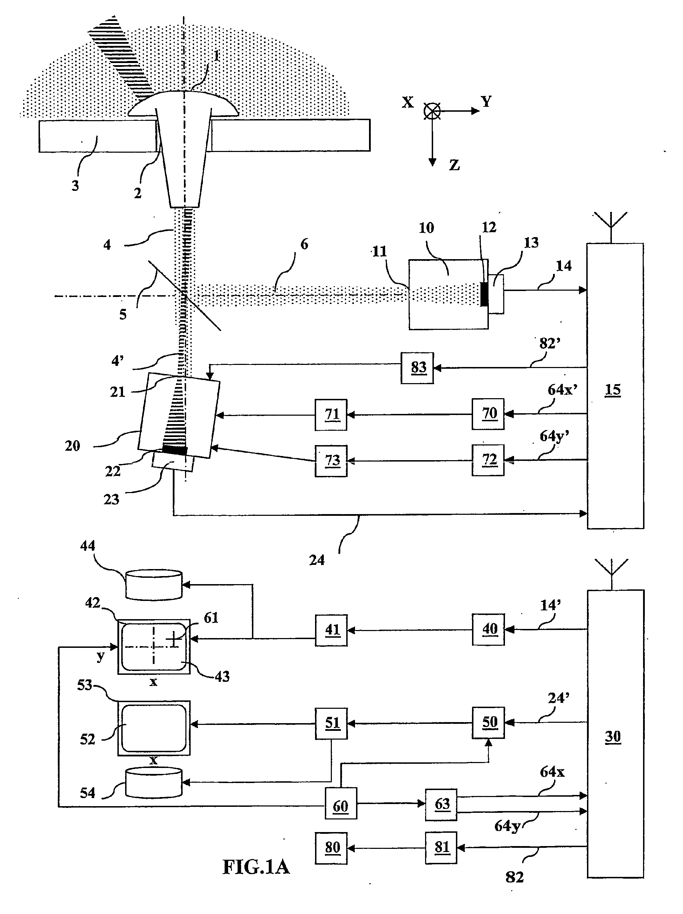

Dans le mode préféré de réalisation qui va maintenant être décrit en référence notamment **aux** **figures 1A à 1C**, on utilise un système optique 1 afocal dioptrique.

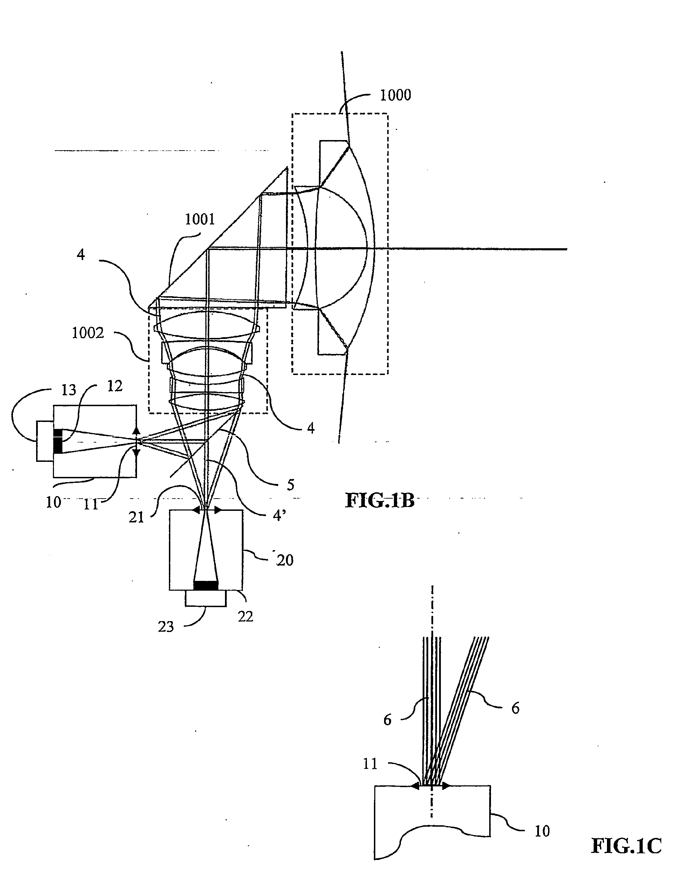

Ce système optique afocal dioptrique est représenté en détail à la figure 1B.

Il est constitué principalement de trois blocs optiques successifs 1000, 1001 et 1002.

Le bloc optique 1000 permet de capturer les faisceaux du champ optique simplement connexe situé en face du bloc optique 1000.

Un prisme 1001 (pouvant être remplacé par un miroir) permet de couder, si nécessaire, les faisceaux en fonction des contraintes d'encombrement et d'implantation mécanique du dispositif.

Le bloc arrière 1002 permet d'obtenir le grossissement optique en sortie de l'afocal.

La **figure 1C** montre en détail la forme des faisceaux optiques 6 en sortie de l'afocal 1 et en entrée de l'objectif 11 de la caméra 10.

La forme du faisceau optique 4' en sortie de l'afocal 1 et en entrée de l'objectif 21 de la caméra 20 ont la même forme.

Le système optique afocal dioptrique grand champ 1 d'axe Z est connu en soi. Il est monté dans une ouverture 2 d'une paroi 3.

Cette paroi 3 peut être le carter d'un dispositif de prise d'image ou la paroi d'une carlingue d'avion, ou le plafond d'un local à surveiller.

Conformément à l'invention, le système optique grand champ 1 est constitué d'un afocal de grossissement angulaire inférieur à un.

Ce système optique 1 fournit un premier faisceau lumineux 4 coaxial à l'axe Z. Dans le premier faisceau lumineux 4, est disposé un duplicateur 5 qui réfléchit le premier faisceau 4 dans une direction Y, de préférence perpendiculaire à l'axe Z afin de générer un premier faisceau dupliqué 6 d'axe Z.

Dans le premier flux lumineux 4 d'axe Z, en aval du duplicateur 5 est disposée une première caméra numérique mobile 20, dont l'objectif 21 ne capture qu'un deuxième faisceau lumineux étroit 4' à partir du premier faisceau lumineux 4.

Cette première caméra 20 est équipée d'une matrice 22 d'éléments photosensibles à transfert de charge connus sous l'acronyme CCD et de moyens 23 pour générer et délivrer un train de premiers signaux électriques 24.

Ces premiers signaux 24 sont ensuite transmis par ondes hertziennes ou infrarouges, ou par des câbles, vers au moins un poste d'observation, décrit ultérieurement dans le présent mémoire, au moyen d'un émetteur-récepteur 15, équipé d'un dispositif de multiplexage.

Coaxialement à l'axe Y, est disposée une deuxième caméra numérique fixe 10, dont l'objectif 11 capture la totalité du premier faisceau 6 dupliqué.

Cette deuxième caméra 10 est également équipée d'une matrice 12 d'éléments photosensibles à transfert de charge et des moyens 13 pour générer et délivrer un train de deuxièmes signaux électriques 14 représentatifs de l'image panoramique captée par la première caméra 10.

Ces deuxièmes signaux électriques 14 sont transmis vers le poste d'observation par l'émetteur réception 15.

A part leurs objectifs 11 et 21, les deux caméras 10 et 20 peuvent être identiques. En particulier, le nombre de pixels définis par les matrices 12 et 22 d'éléments photosensibles peuvent être identiques. Les images ou photos de taille identique que l'on peut obtenir à partir des deux trains de signaux 14 et 24 ont alors la même résolution.

Ces trains de signaux 14 et 24, émis par l'émetteur-récepteur 15 sont reçus au poste d'observation par le bloc réception d'un deuxième émetteur-récepteur 30, également équipé d'un dispositif de multiplexage.

Les trains des deuxièmes signaux 14', équivalents aux trains des deuxièmes signaux 14, reçus par le deuxième émetteur-récepteur 30 sont traités par un dispositif électronique 40 de traitement d'informations et de distorsions d'image qui fournit à une mémoire 41 les données représentatives de l'image grand champ 42 capturée par la deuxième caméra 10.

Cette image grand champ 42 est affichée sur un écran 43, et les données de l'image 42 peuvent-être archivées sur un support 44 pour une visualisation ultérieure.

De la même manière, les trains des premiers signaux 24', équivalents aux trains des premiers signaux 24, reçus par le deuxième émetteur-récepteur 30 sont traités par un deuxième dispositif électronique 50 de traitement d'informations et de distorsions d'image qui fournit à une deuxième mémoire 51 les données représentatives de la région d'intérêt 52 capturée par la première caméra 20.

Cette région d'intérêt 52 est affichée sur un deuxième écran 53, et les données de cette région d'intérêt 52 peuvent être avantageusement affichées sur un deuxième support 54, afin de pouvoir être visualisées ultérieurement.

Les dispositifs électroniques 40 et 50 peuvent avantageusement être remplacés par un micro-ordinateur du commerce comportant des logiciels de traitement des distorsions d'image inhérentes aux prises de vue par des objectifs grand champ, tels que ceux connus dans l'état de la technique.

La région d'intérêt 52 de l'image grand champ 42 peut aussi être incrustée dans l'image grand champ 42 et affichée sur le même écran que celui servant à l'affichage de l'image grand champ, sans sortir du cadre de l'invention.

Au poste d'observation, est également prévu un dispositif de navigation 60 dans l'image grand champ 42.

Ce dispositif de navigation 60 peut par exemple comporter un joystick pour positionner un curseur 61 dans l'image grand champ 42 affichée sur l'écran 43.

La position du curseur 61 définit les coordonnées angulaires θx, θy de la région d'intérêt 52 de l'image grand champ 42 que l'observateur veut voir visualiser sur le deuxième écran 53 et filmer par la première caméra 20.

Préférentiellement, les coordonnées x et y définies par le dispositif de navigation 60 sont délivrées au deuxième dispositif électronique 50, afin que ce dernier puisse traiter correctement les distorsions de l'image prise par la première caméra 20.

Ces coordonnées angulaires θx, θy sont également fournies à un dispositif 63 qui délivre au deuxième émetteur-récepteur un premier train de signaux 64x représentatifs de la valeur θx et un deuxième train de signaux 64y -représentatifs de la valeur θy.

Les signaux 64x et 64y sont émis par le deuxième émetteur-récepteur 30 et reçus par l'émetteur-récepteur 15 du dispositif de prise d'image.

Le premier train de signaux 64x', équivalents au premier train de signaux 64x et reçu par l'émetteur-récepteur 15 est délivré à un organe de commande 70 d'un premier moteur électrique 71 qui permet de faire pivoter la première caméra 20 autour de l'axe X pour capturer le champ de vue réduit correspond au deuxième faisceau 4'.

De la même manière, le deuxième train de signaux 64y', équivalents au deuxième train de signaux 64y, reçu par l'émetteur-récepteur 15, est délivré à un deuxième organe de commande 72 d'un deuxième moteur électrique 73 qui permet de faire pivoter la première caméra 20 dans le premier faisceau lumineux 4 autour de l'axe Y.

Les rotations autour des axes X et Y de la première caméra 20 permet de sélectionner le deuxième faisceau lumineux 4' capturé par la première caméra 20.

Bien entendu, les déplacements de la première caméra 20 correspondent évidemment aux coordonnées angulaires dans l'image grand champ 42 affichée sur l'écran 43.

Il est à noter que les coordonnées angulaires θx et θy de l'image grand champ 42 correspondent à un angle de vision voisin de 180° du champ observé, alors que les déplacements angulaires θx et θy de la première caméra 20 dans le premier faisceau lumineux 4 sont très faibles.

Cette disposition permet à la première caméra 20 de se positionner très rapidement dans la position (θx, θy) choisie par l'observateur, et de capturer le deuxième faisceau lumineux 4' correspondant à la région d'intérêt 52 de l'image grand champ 42 qui donnera naissance à la région d'intérêt 52 de bonne résolution.

Avantageusement, ainsi que cela est montré sur la figure 1, est associé au dispositif de navigation 60 un dispositif d'affichage de l'étendue angulaire 80 de la région d'intérêt 52 à afficher sur l'écran 53.

L'information correspondante est délivrée à un dispositif électronique 81 qui génère des signaux correspondants 82, émis par le deuxième émetteur 30 et reçus par le premier émetteur-récepteur 15 du dispositif de prise de vue.

Les signaux correspondants reçus 82' sont délivrés à un organe de commande 83 d'un zoom optique de la première caméra 20.

La région d'intérêt 52 affichée sur le deuxième écran 53 sera ainsi plus ou moins grossie en fonction du réglage du zoom optique tout en conservant la même résolution de la matrice 22 de la première caméra 20.

Il est ainsi possible de visualiser des détails de l'image grand champ 42 avec une grande précision.

Dans un autre mode de réalisation, le dispositif de capture comporte des moyens de traitement d'image (par exemple logiciels) adaptés à détecter un mouvement et/ou une variation de l'intensité lumineuse dans l'image grand champ 42 et à commander les moyens de sélection en fonction du résultat de cette détection.

Ces moyens de traitement d'image sont connus de l'homme du métier et ne seront pas décrits ici. Ils sont notamment aptes à effectuer des opérations classiques de segmentation et de reconnaissance de forme.

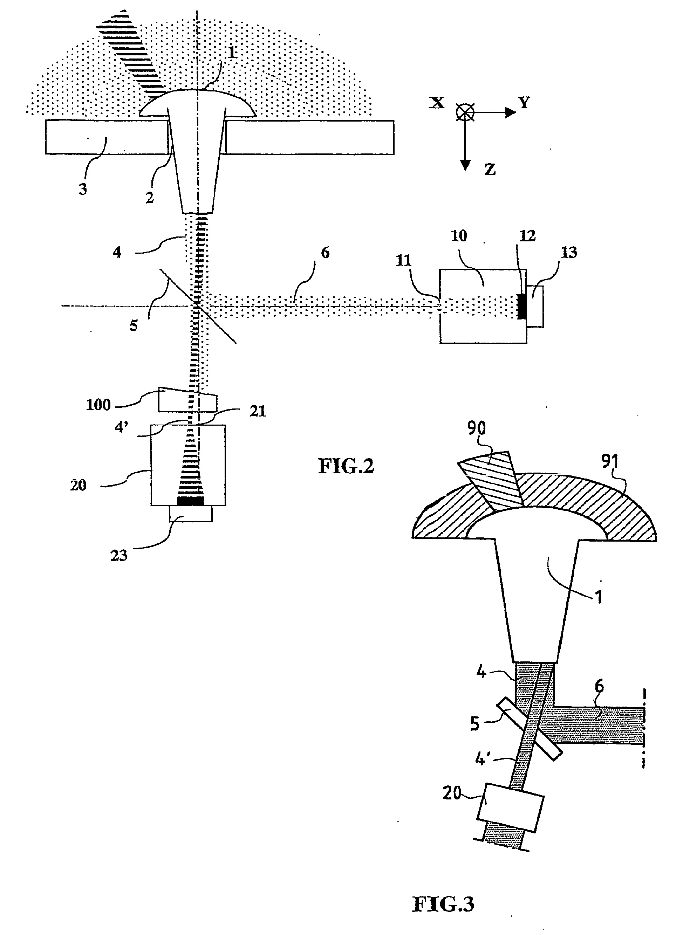

La **figure 2** représente un dispositif de capture conforme à l'invention dans un autre mode de réalisation.

Le système d'observation, identique dans-ce mode de réalisation à celui décrit en référence aux figures 1A à 1C, n'est pas représenté sur la figure 2.

Dans ce mode de réalisation, la première caméra 20 est fixe, et le deuxième faisceau 4' est dévié, en direction de cette première caméra 20, par un prisme 100 en rotation autour de l'axe Z.

Dans d'autre modes de réalisation non représentés ici, le prisme 100 peut être remplacé par un autre moyen de déviation, et notamment par un miroir, ou tout autre système de diffraction connu de l'homme de l'art.

La **figure 3** montre le champ de vision réduit 90 qui donne naissance au deuxième faisceau lumineux 4' capturé par la première caméra 20, et le grand champ de vision 91 capturé par la deuxième caméra 10.

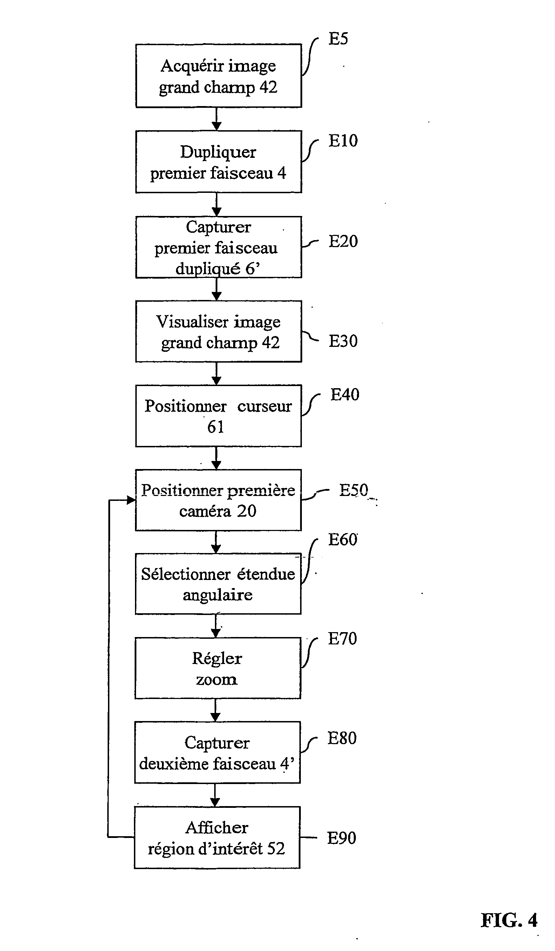

La **figure 4** représente les principales étapes E5 à E90 d'un procédé de traitement selon l'invention dans un mode préféré de réalisation.

Au cours d'une première étape E5, on acquiert une image grand champ 42 avec un système optique grand champ 1 fournissant un premier faisceau lumineux 4.

Cette étape E5 d'acquisition est suivie par une étape E10 au cours de laquelle on duplique le premier faisceau lumineux 4.

Cette duplication peut, par exemple, être obtenue en utilisant un duplicateur 5 tel que décrit brièvement en référence à la figure 1.

L'étape E10 de duplication est suivie par une étape E20 au cours de laquelle on capture l'intégralité du premier faisceau dupliqué 6. Cette étape E20 de capture du premier faisceau dupliqué 6 est, par exemple, effectuée en utilisant la deuxième caméra 10 décrite précédemment.

Dans le mode de réalisation décrit ici, l'étape E20 de capture du premier faisceau dupliqué 6 est suivie par une étape E30 de visualisation sur un poste de visualisation, constitué par exemple par un écran 43, de l'image grand champ 42 obtenue à partir du premier faisceau dupliqué 6, par la deuxième caméra 10.

Cette étape E30 de visualisation est suivie par un ensemble d'étapes E40 à E70 de sélection d'un deuxième faisceau lumineux 4' à partir du premier faisceau lumineux 4.

Plus précisément, au cours d'une étape E40, on positionne un curseur 61 dans l'image grand champ 42 affichée sur l'écran 43.

Le déplacement de ce curseur peut par exemple être effectué au moyen d'un joystick.

Quoi qu'il en soit, la position du curseur 61 définit ainsi des coordonnées angulaires θx, θy d'une région d'intérêt 52 de l'image grand champ 42 que l'observateur veut visualiser par exemple sur un deuxième écran 53.

L'étape E40 de positionnement du curseur 61 est suivie par une étape E50 de positionnement de la première caméra 20, de façon à ce qu'elle capture un deuxième faisceau 4' correspondant à la région d'intérêt 52 sélectionnée au cours de l'étape précédente.

L'étape E50 de positionnement de la première caméra 20 est suivie par une étape E60 de sélection, à partir du poste de visualisation, de l'étendue angulaire de la région d'intérêt 52 à afficher sur l'écran 53.

L'étape E60 de sélection de l'étendue angulaire est suivie par une étape E70 au cours de laquelle on règle ce zoom optique de la première caméra 20 en fonction de l'étendue angulaire précitée.

L'étape E70 de règlement du zoom optique est suivie par une étape E80 au cours de laquelle on capture le deuxième faisceau 4' correspondant à la position et l'étendue angulaire de la région d'intérêt 52.

L'étape E80 de capture du deuxième faisceau 4' est suivie par une étape E90 au cours de laquelle on affiche la région d'intérêt 52 par exemple sur l'écran 53, ou en incrustation dans l'écran 43 d'affichage de l'image panoramique 42.

L'étape E90 d'affichage de la région d'intérêt 52 est suivie par l'étape E40 de positionnement du curseur 61 déjà décrite.

Dans un autre mode de réalisation, l'étape E20 de capture du premier faisceau dupliqué est suivie par une étape de traitement d'image de l'image 42 grand champ visant à détecter dans cette image grand champ un mouvement ou une variation de l'intensité lumineuse.

Cette étape de traitement d'image permet ainsi de déterminer automatiquement, les coordonnées angulaires θx, θy d'un région d'intérêt, et non pas au moyen du curseur 61 tel que décrit précédemment.

Dans une autre variante de réalisation, au lieu de déplacer la première caméra 20 (étape E50), on fait pivoter, en fonction des coordonnées an gulaires θx, θy, des moyens de déviation pour-dévier-le deuxième faisceau 4' en direction de la première caméra 20.

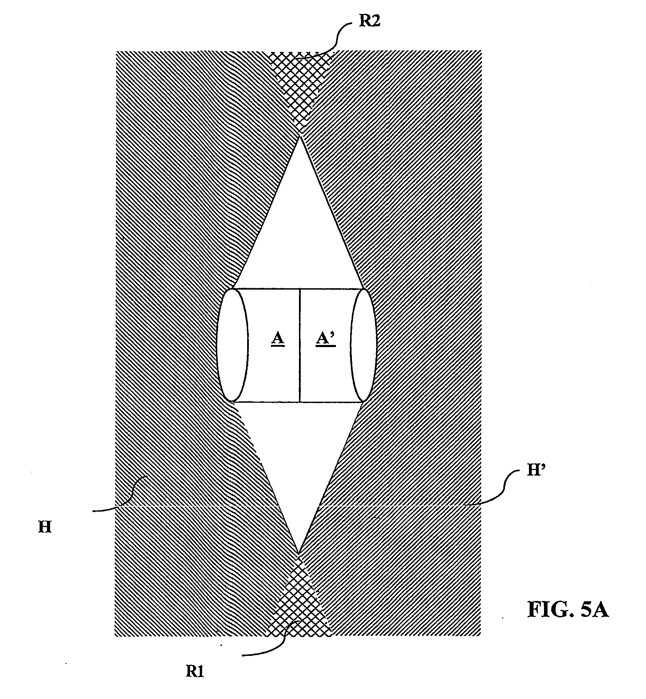

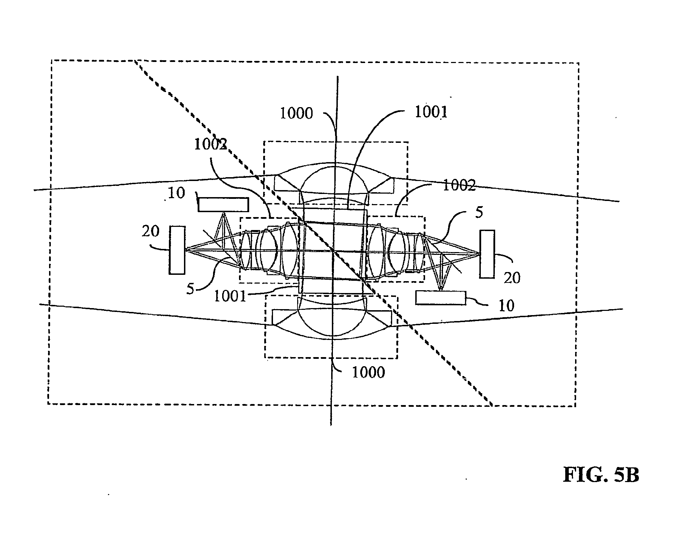

La **figure 5A** représente un système de capture couvrant un espace à 360° conforme à l'invention dans un mode préféré de l'invention et la **figure 5B** des détails de ce système de capture.

Ce système de capture comporte deux dispositifs de capture A et A' tels que décrits précédemment en référence aux figures 1A ou 2, agencés tête bêche.

Dans ce mode de réalisation, les systèmes optiques des deux dispositifs de capture A et A' sont aptes à couvrir plus d'un demi-espace, respectivement représentés par les parties hachurées H et H'.

L'homme du métier comprendra aisément que les parties hachurées R1 et R2 sont des zones de recouvrement capturées par les deux dispositifs A et A'.

## Revendications

1. - Dispositif de capture d'une image (42) acquise par un système optique (1) grand champ simplement connexe constitué d'un afocal de grossissement angulaire inférieur à un, ce système optique (1) fournissant un premier faisceau lumineux (4) correspondant à ce grand champ,
le dispositif comportant :
- des moyens de sélection, à partir dudit premier faisceau (4), d'un deuxième faisceau lumineux (4') correspondant à un champ réduit dudit grand champ définissant une étendue angulaire représentative d'une région d'intérêt (52) quelconque de ladite image (42) ;
- une première caméra (20), comportant un premier objectif (21) adapté à capturer ledit deuxième faisceau (4') à champ réduit avec une première résolution ;
- des moyens (5) pour dupliquer ledit premier faisceau lumineux (4) grand champ en un premier faisceau dupliqué (6) ; et
- une deuxième caméra (10) comportant un deuxième objectif (11), différent du premier objectif, adapté à capturer l'intégralité dudit premier faisceau dupliqué (6) avec une deuxième résolution pour l'étendue angulaire de la région d'intérêt, inférieure à ladite première résolution, et avec un coefficient de réduction défini par le rapport entre ledit grand champ et ledit champ réduit,
ladite deuxième (10) caméra et ladite première caméra (20) ayant des matrices (12, 22) d'éléments photosensibles.

2. - Dispositif de capture selon la revendication 1, **caractérisé en ce que** ladite première caméra (20) étant mobile, lesdits moyens de sélection comportent des moyens de positionnement (60, 61, 71, 73) de ladite première caméra (20), dans une position (θx, θy) telle qu'elle reçoit ledit deuxième faisceau (4').

3. - Dispositif de capture selon la revendication 1, **caractérisé en ce que** ladite première caméra (20) étant fixe, lesdits moyens de sélection comportent des moyens de déviation adaptés à dévier ledit deuxième faisceau (4') en direction de ladite première caméra (20).

4. - Dispositif de capture selon la revendication 3, **caractérisé en ce que** lesdits moyens de déviation sont constitués par un prisme, un miroir ou tout type de système de diffraction, mobiles en rotation dans ledit premier faisceau (4).

5. - Dispositif de capture selon l'une quelconque des revendications 1 à 4,
**caractérisé en ce que** la première caméra (20) comporte un dispositif de zoom optique permettant de définir l'étendue angulaire de ladite région d'intérêt (52).

6. - Dispositif de capture selon l'une quelconque des revendications 1 à 5,
**caractérisé en ce qu'**il comporte en outre un poste de visualisation (43) de ladite image grand champ (42), ledit poste de visualisation étant situé à proximité de moyens de commande (83) desdits moyens de sélection, la proximité du poste de visualisation avec lesdits moyens de commande permettant, à un observateur du poste de visualisation, de pouvoir positionner la première caméra dans le deuxième faisceau sous contrôle de l'image grand champ.

7. - Dispositif de capture selon l'une quelconque des revendications 1 à 6,
**caractérisé en ce qu'**il comporte des moyens de traitement d'image de ladite image grand champ (42) adaptés à détecter un mouvement et/ou une variation de l'intensité lumineuse dans ladite image grand champ (42) et à commander lesdits moyens de sélection en fonction du résultat de ladite détection.

8. - Dispositif de capture selon l'une quelconque des revendications 1 à 7,
**caractérisé en ce que** ledit système optique (1) et ladite première caméra (10) sont aptes à capturer lesdits premier et deuxième faisceaux lumineux (4, 4') dans le domaine de l'infrarouge.

9. - Système de capture d'une image couvrant un espace à 360°,
**caractérisé en ce qu'**il comporte deux dispositifs de capture (A, A') conformes à l'une quelconque des revendications 1 à 8 agencés tête bêche, les systèmes optiques de ces systèmes de capture (A, A') étant aptes à couvrir au moins un demi-espace.

## Claims

1. A system for capturing an image (42) acquired by a simply connected wide-field optical system (1) consisting of an afocal lens with angular enlargement of less than 1 and supplying a wide-field first light beam (4), the system comprising:
- means for selecting from said first beam (4) a second light beam (4') corresponding to a narrow field within said wide field defining an angular magnitude representative of a region of interest (52) of said image (42);
- a first video camera (20) including a first lens (21) adapted to capture said narrow-field second beam (4') with a first resolution;
- means (5) for duplicating said wide-field first light beam (4) to produce a duplicate first beam (6); and
- a second video camera (10) including a second lens (11) adapted to capture the whole of said duplicate first beam (6) with a second resolution for the angular magnitude of the region of interest lower than said first resolution by a reduction coefficient defined by the ratio between said wide field and said narrow field,
said second video camera (10) and said first video camera (20) having photosensitive element matrices (12, 22).

2. A capture system according to claim 1, **characterized in that**, said first video camera (20) being mobile, said selection means include means (60, 61, 71, 73) for positioning said first video camera (20) in a position (θx, θy) such that it receives said second beam (4').

3. A capture system according to claim 1, **characterized in that**, said first video camera (20) being stationary, said selection means include deflection means for deflecting said second beam (4') towards said first video camera (20).

4. A capture system according to claim 3, **characterized in that** said deflection means comprise a prism, a mirror or any type of diffraction system rotatable in said first beam (4).

5. A capture system according to any one of claims 1 to 4, **characterized in that** the first video camera (20) includes an optical zoom system for defining the angular magnitude of said region of interest (52).

6. A capture system according to any one of claims 1 to 5, **characterized in that** it further includes a station (43) for viewing said wide field image (42) in the vicinity of control means (83) of said selection means, said vicinity with said control means (83) enables an observer of control means to position the first video camera in the second beam with reference to the wide-field image.

7. A capture system according to any one of claims 1 to 6, **characterized in that** it includes means for processing said wide field image (42) adapted to detect a movement and/or a variation of luminous intensity in said wide field image (42) and to command said selection means accordingly.

8. A capture system according to any one of claims 1 to 7, **characterized in that** said optical system (1) and said first video camera (20) are adapted to capture first and second infrared light beams (4, 4').

9. A system for capturing an image covering a 360° space, **characterized in that** it comprises two capture systems (A, A') according to any one of claims 1 to 8 arranged back-to-back, the optical systems of the capture systems (A, A') being adapted to cover at least a half-space.

## Patentansprüche

1. Vorrichtung zum Erfassen eines Bildes (42), das mittels eines optischen Systems (1) mit einfach zusammenhängendem Weitwinkel aufgenommen ist, welches von einem afokalen System mit einer Winkelvergrößerung kleiner eines gebildet ist,
wobei dieses optische System (1) ein erstes Lichtbündel (4) liefert, das diesem Weitwinkel entspricht,
wobei die Vorrichtung folgendes umfaßt:
- Mittel, um anhand des ersten Bündels (4) ein einem kleineren Feld des Weitwinkels entsprechendes zweites Lichtbündel (4') auszuwählen, das einen eine beliebige interessierende Region (52) des Bildes (42) darstellenden Winkelbereich definiert,
- eine erste Kamera (20), die ein erstes Objektiv (21) aufweist, das geeignet ist, das zweite Bündel (4') mit kleinerem Feld mit einer ersten Auflösung zu erfassen,
- Mittel (5), um das erste Weitwinkellichtbündel (4) in ein erstes dupliziertes Bündel (6) zu duplizieren, und
- eine zweite Kamera (10), die ein sich von dem ersten Objektiv unterscheidendes zweites Objektiv (11) aufweist, das geeignet ist, das gesamte erste duplizierte Bündel (6) mit einer zweiten Auflösung für den Winkelbereich der interessierenden Region, welche geringer ist als die erste Auflösung, sowie mit einem durch das Verhältnis zwischen dem Weitwinkel und dem kleineren Feld definierten Verkleinerungsfaktor zu erfassen,
wobei die zweite Kamera (10) und die erste Kamera (20) Matrizes (12, 22) aus lichtemplindlichen Elementen aufweisen.

2. Erfassungsvorrichtung nach Anspruch 1, **dadurch gekennzeichnet, daß** - wenn die erste Kamera (20) beweglich ist - die Auswahlmittel Mittel (60, 61, 71, 73) umfassen, um die erste Kamera (20) in eine Position (θx, θy) zu bringen, die derart ist, daß sie das zweite Bündel (4') empfängt.

3. Erfassungsvorrichtung nach Anspruch 1, **dadurch gekennzeichnet, daß -** wenn die erste Kamera (20) feststehend ist - die Auswahlmittel Ablenkmittel umfassen, die geeignet sind, das zweite Bündel (4') in Richtung der ersten Kamera (20) abzulenken.

4. Erfassungsvorrichtung nach Anspruch 3, **dadurch gekennzeichnet, daß** die Ablenkmittel von einem Prisma, einem Spiegel oder jeder Art von Beugungssystem gebildet sind, die in dem ersten Bündel (4) drehbeweglich sind.

5. Erfassungsvorrichtung nach einem der Ansprüche 1 bis 4, **dadurch gekennzeichnet, daß** die erste Kamera (20) eine optische Zoomvorrichtung umfaßt, die ermöglicht, den Winkelbereich der interessierenden Region (52) zu definieren.

6. Erfassungsvorrichtung nach einem der Ansprüche 1 bis 5, **dadurch gekennzeichnet, daß** sie ferner eine Einrichtung (43) zum Anzeigen des Weitwinkelbildes (42) umfaßt, wobei die Anzeigeeinrichtung sich in der Nähe von Mitteln (83) zum Steuern der Auswahlmittel befindet, wobei die Nähe der Anzeigeeinrichtung zu den Steuermitteln einem Beobachter der Anzeigeeinrichtung ermöglicht, die erste Kamera in dem zweiten Bündel unter Kontrolle des Weitwinkelbildes zu positionieren.

7. Erfassungsvorrichtung nach einem der Ansprüche 1 bis 6, **dadurch gekennzeichnet, daß** sie Mittel zur Verarbeitung des Weitwinkelbildes (42) umfaßt, die geeignet sind, eine Bewegung und/oder eine Änderung der Lichtstärke in dem Weitwinkelbild (42) zu erfassen und die Auswahlmittel in Abhängigkeit des Ergebnisses der Erfassung zu steuern.

8. Erfassungsvorrichtung nach einem der Ansprüche 1 bis 7, **dadurch gekennzeichnet, daß** das optische System (1) und die erste Kamera (20) geeignet sind, das erste und das zweite Lichtbündel (4, 4') im Infrarotbereich zu erfassen.

9. System zum Erfassen eines Bildes, das einen 360°∼Raum abdeckt, **dadurch gekennzeichnet, daß** es zwei Erfassungsvorrichtungen (A, A') nach einem der Ansprüche 1 bis 8 umfaßt, die umgekehrt zueinander angeordnet sind, wobei die optischen Systeme dieser Erfassungssysteme (A, A') geeignet sind, wenigstens einen Halbraum abzudecken.
